# EUROPEAN PATENT APPLICATION

(11) **EP 4 560 589 A1**
(43) Date of publication of application: **28.05.2025**
(21) Application number: 23915687.0
(22) Date of filing: 02.11.2023
(51) Int. Cl.: G06V 20/50

(54) **IMAGE PROCESSING METHOD AND APPARATUS, AND ELECTRONIC DEVICE, COMPUTER-READABLE STORAGE MEDIUM AND COMPUTER PROGRAM PRODUCT**

(30) Priority: 11.01.2023 CN 202310066903
(71) Applicant: Tencent Technology (Shenzhen) Company Limited, Shenzhen, Guangdong 518057 (CN)
(72) Inventor: NIU, Ziguang, Shenzhen, Guangdong 518057 (CN)
(74) Representative: Gunzelmann, Rainer
(86) International application number: PCT/CN2023/129446
(87) International publication number: WO 2024/148929

(57) **Abstract**

An image processing method and apparatus, and an electronic device, a computer-readable storage medium and a computer program product, which are applied to various image processing scenarios in the field of maps, cloud technology, artificial intelligence, maps, intelligent transportation, on-board devices, etc. The image processing method comprises: acquiring road real-scene images within a specified geographic range, and acquiring a road network image within the specified geographic range, wherein the road real-scene images represent road imaging information within the specified geographic range, and the road network image comprises a topological structure of roads within the specified geographic range; combining the road network image with the road real-scene images, so as to obtain an image to be subjected to recognition; performing feature extraction on the image to be subjected to recognition, so as to obtain a feature to be recognized; and performing road surface identification on the basis of said feature, so as to obtain road surface information, wherein the road surface information is information associated with road surfaces within the specified geographic range.

## Description

### RELATED APPLICATION

This application is filed based on Chinese Patent Application No. 202310066903.9, filed on January 11, 2023, and claims priority to the Chinese Patent Application.

### FIELD OF THE TECHNOLOGY

The present disclosure relates to image processing technologies in the field of computer application, and in particular, to an image processing method and device, an electronic device, a computer-readable storage medium, and a computer program product.

### BACKGROUND OF THE DISCLOSURE

Image processing usually involves obtaining of road surface information, i.e., a process of obtaining related information of a road surface from an image. Generally, the road surface information may be obtained by processing a real-time image of a road. However, the road is usually blocked in the real-time image of the road, and connectivity of the road in the real-time image is affected. As a result, accuracy of the obtained road surface information is affected.

### SUMMARY

Embodiments of the present disclosure provide an image processing method and device, an electronic device, a computer-readable storage medium, and a computer program product, and can improve accuracy of road surface information.

Technical solutions of the embodiments of the present disclosure are implemented in the following manners.

An embodiment of the present disclosure provides an image processing method. The method is executed by an electronic device, and includes:
obtaining a real-time road image of a road within a pre-defined geographic range, and obtaining a road network image of the road within the pre-defined geographic range, the road network image indicating a topology structure of the road within the pre-defined geographic range, and the real-time road image indicating the road within the pre-defined geographic range;
combining the road network image and the real-time road image, to obtain a combined road image;
extracting a road feature from the combined road image; and
determining road surface information indicating a road surface in the pre-defined geographic range based on the extracted road feature, the road surface information being associated with the road surface within the pre-defined geographic range.

An embodiment of the present disclosure provides an image processing device, including:
an image obtaining module, configured to obtain a real-time road image within a pre-defined geographic range, and obtain a road network image within the pre-defined geographic range, the real-time road image indicating the road within the pre-defined geographic range, and the road network image indicating a topology structure of the road within the pre-defined geographic range;
an image combination module, configured to combine the road network image and the real-time road image, to obtain a combined road image;
a feature extraction module, configured to extract a road feature from the combined road image; and
an information recognition module, configured to determine road surface information indicating a road surface in the pre-defined geographic range based on the extracted road feature, the road surface information being associated with the road surface within the pre-defined geographic range.

An embodiment of the present disclosure provides an electronic device for image processing. The electronic device includes:
a memory, configured to store computer-executable instructions or a computer program; and
a processor, configured to implement, when executing the computer-executable instructions or computer program stored in the memory, the image processing method provided in the embodiments of the present disclosure.

An embodiment of the present disclosure provides a computer-readable storage medium, having computer-executable instructions or a computer program stored therein. When the computer-executable instructions or computer program is for being executed by a processor, the image processing method provided in the embodiments of the present disclosure is implemented.

An embodiment of the present disclosure provides a computer program product, including computer-executable instructions or a computer program. When the computer-executable instructions or computer program is executed by a processor, the image processing method provided in the embodiments of the present disclosure is implemented.

The embodiments of the present disclosure have at least the following beneficial effects: In a process in which the road surface information within the pre-defined geographic range is obtained, the road surface information is obtained not only based on the real-time road image within the pre-defined geographic range, but also with reference to the road network image within the pre-defined geographic range. The real-time road image can accurately describe information included on the road, and the road network image can completely describe topological connectivity of the road. Therefore, when the road surface information is obtained with reference to the real-time road image and the road network image, connectivity of the road can be improved while it is ensured that the road surface information is accurate, so that accuracy of the obtained road surface information can be improved.

### BRIEF DESCRIPTION OF THE DRAWINGS

FIG. 1 is a schematic diagram of an architecture of an image processing system according to an embodiment of the present disclosure.
FIG. 2 is a schematic diagram of a structure of a server in FIG. 1 according to an embodiment of the present disclosure.
FIG. 3 is a schematic flowchart 1 of an image processing method according to an embodiment of the present disclosure.
FIG. 4 is an example road network image according to an embodiment of the present disclosure.
FIG. 5 is an example schematic flowchart of obtaining a road network image according to an embodiment of the present disclosure.
FIG. 6 is a schematic flowchart 2 of an image processing method according to an embodiment of the present disclosure.
FIG. 7 is a schematic flowchart of obtaining a target instance feature according to an embodiment of the present disclosure.
FIG. 8 is an example schematic flowchart of obtaining a road recognition model according to an embodiment of the present disclosure.
FIG. 9 is a schematic flowchart 3 of an image processing method according to an embodiment of the present disclosure.
FIG. 10 is an example schematic diagram of obtaining road surface information according to an embodiment of the present disclosure.
FIG. 11 is an example diagram of a network structure of a module according to an embodiment of the present disclosure.
FIG. 12 is an example schematic diagram of a result of obtaining a road surface according to an embodiment of the present disclosure.
FIG. 13 is an example schematic diagram of application of road surface information according to an embodiment of the present disclosure.
FIG. 14 is another example schematic diagram of application of road surface information according to an embodiment of the present disclosure.

### DESCRIPTION OF EMBODIMENTS

To make the objectives, technical solutions, and advantages of the present disclosure clearer, the following further describes the present disclosure in detail with reference to the accompanying drawings. The described embodiments are not to be considered as a limitation on the present disclosure. All other embodiments obtained by a person of ordinary skill in the art without creative efforts shall fall within the protection scope of the present disclosure.

In the following descriptions, "some embodiments" are involved, and a subset of all possible embodiments is described. However, "some embodiments" may be a same subset or different subsets of all the possible embodiments, and may be combined with each other without conflict.

The term "first\second" involved in the following descriptions is for distinguishing similar objects, and does not represent a specific order of the objects. "First\second" may be interchanged in a specific order or sequence when permitted, so that the embodiments of the present disclosure described herein can be performed in a sequence other than those illustrated or described herein.

Unless otherwise defined, all technical and scientific terms used in the embodiments of the present disclosure have same meanings as those commonly understood by a person skilled in the art belonging to the present disclosure. Terms used in the embodiments of the present disclosure are only intended to describe the embodiments of the present disclosure, and are not intended to limit the present disclosure.

Before the embodiments of the present disclosure are further described in detail, nouns and terms involved in the embodiments of the present disclosure are described. The nouns and terms involved in the embodiments of the present disclosure are subject to the following explanations.
(1) Artificial intelligence (AI) is a theory, a method, a technology, and an application system that use a digital computer or a machine controlled by the digital computer to simulate, extend, and expand human intelligence, perceive an environment, obtain knowledge, and use the knowledge to obtain an optimal result.
(2) Machine learning (ML) is a discipline in which a plurality of fields intersect, and relates to a plurality of disciplines such as a probability theory, statistics, an approximation theory, convex analysis, and a computational complexity theory. The machine learning is for studying how a computer simulates or implements a human learning behavior, to obtain new knowledge or a new skill, and reorganize an existing knowledge structure, so that performance of the computer is continuously improved. The machine learning is a core of artificial intelligence, a basic manner to make a computer intelligent, and is applied to various fields of the artificial intelligence. The machine learning usually includes technologies such as an artificial neural network, a belief network, reinforcement learning, transfer learning, and inductive learning.
(3) An artificial neural network is a mathematical model that imitates a structure and a function of a biological neural network. An example structure of the artificial neural network in the embodiments of the present disclosure may include a graph convolutional network (GCN, which is a neural network for processing data of a graph structure), a deep neural network (DNN), a convolutional neural network (CNN), a recurrent neural network (RNN), a neural state machine (NSM), a phase-functioned neural network (PFNN), and the like. A road recognition model, a to-be-trained model, and a target road recognition model that are involved in the embodiments of the present disclosure are all models corresponding to the artificial neural network.
(4) Road network information is also referred to as standard definition (SD) road network information. The road network information is an abstract representation of a road in the real world, and describes topological connectivity of the road. In the embodiments of the present disclosure, the road network information may be standard definition (which is lower than pre-defined accuracy) road association information collected on site.
(5) A road surface refers to a road between two intersection nodes that is for passing (for example, traveling by a vehicle and walking by a pedestrian). In addition, there is no physical separation (for example, a green belt or a fence) or logical separation (for example, double yellow lines) on one road surface, and passing objects travel or walk in a same direction. Association information of the road surface is referred to as road surface information. Some roads include one road surface (for example, a one-way road), some roads include two road surfaces, and the like. This is not limited in the embodiments of the present disclosure.

To obtain road surface information, a real-time image of a road may be processed to obtain the road surface information. However, the road is usually blocked and thus interrupted in the real-time image of the road due to factors such as light, a shadow, and blocking by trees, and connectivity of the road in the real-time image is affected. Consequently, a part of a road surface cannot be recognized due to the interruption of the part. As a result, accuracy of the obtained road surface information is affected.

In addition, to obtain the road surface information, geometric information in road network information may alternatively be expanded by a pre-defined width according to a pre-defined policy, to obtain the road surface information. In this way, although the connectivity of the road can be ensured, information included in the road network information is estimated, and the accuracy of the obtained road surface information is affected.

Based on this, the embodiments of the present disclosure provide an image processing method and device, an electronic device, a computer-readable storage medium, and a computer program product, and can improve the accuracy of the road surface information. Example application of the electronic device for image processing (which is referred to as an image processing device for short below) provided in the embodiments of the present disclosure is described below. The image processing device provided in the embodiments of the present disclosure may be implemented as various types of terminals such as a smartphone, a smart watch, a notebook computer, a tablet computer, a desktop computer, a smart appliance, a set-top box, a smart vehicle-mounted device, a portable music player, a personal digital assistant, a dedicated message device, a smart voice interaction device, a portable game device, and a smart speaker, or may be implemented as a server. Example application when the image processing device is implemented as a server is described below.

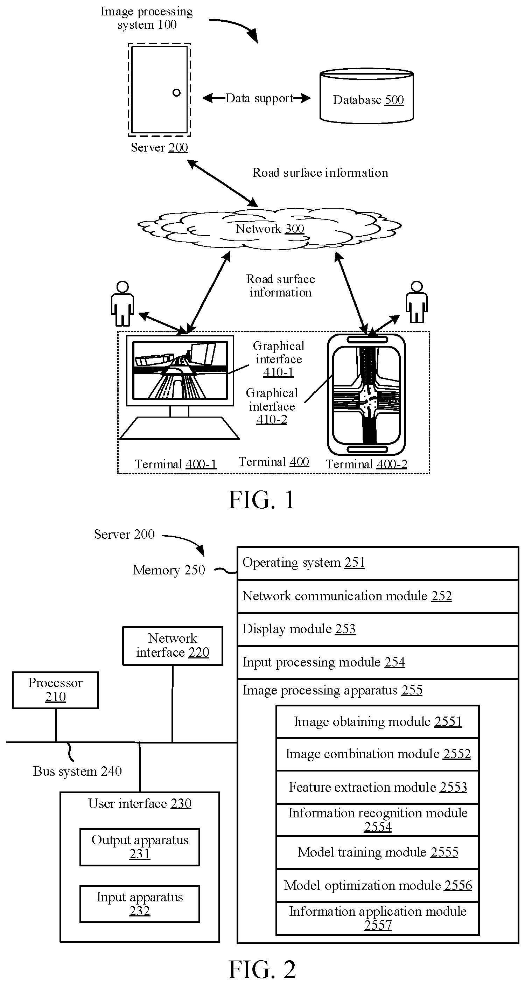

FIG. 1 is a schematic diagram of an architecture of an image processing system according to an embodiment of the present disclosure. As shown in FIG. 1, to support an image processing application, in an image processing system 100, a terminal 400 (where a terminal 400-1 and a terminal 400-2 are shown as an example) is connected to a server 200 (which is referred to as an image processing device) through a network 300. The network 300 may be a wide area network, a local area network, or a combination thereof. In addition, the image processing system 100 further includes a database 500 for providing data support to the server 200. In addition, FIG. 1 shows a case in which the database 500 is independent of the server 200. In addition, the database 500 may alternatively be integrated in the server 200. This is not limited in this embodiment of the present disclosure.

The terminal 400 is configured to render a road within a pre-defined geographic range based on road surface information (for example, content displayed on a graphical interface 410-2), and is further configured to display a navigation guidance sign on the rendered road (for example, content displayed on a graphical interface 410-1).

The server 200 is configured to obtain a real-time road image of the road within the pre-defined geographic range, and obtain a road network image of the road within the pre-defined geographic range, where the road network image indicates a topology structure of the road within the pre-defined geographic range, and the real-time road image indicates the road within the pre-defined geographic range; combine the road network image and the real-time road image, to obtain a combined road image; extract a road feature from the combined road image; and determine road surface information based on the extracted road feature, the road surface information indicating a road surface in the pre-defined geographic range and being associated with the road surface in the pre-defined geographic range. The server 200 is further configured to send the road surface information to the terminal 400 through the network 300.

In some embodiments, the server 200 may be an independent physical server, a server cluster or distributed system including a plurality of physical servers, or a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. The terminal 400 may be a smartphone, a smart watch, a notebook computer, a tablet computer, a desktop computer, a smart television, a set-top box, a smart vehicle-mounted device, a portable music player, a personal digital assistant, a dedicated message device, a portable game device, a smart speaker, or the like, but is not limited thereto. The terminal and the server may be connected directly or indirectly in a wired or wireless communication manner. This is not limited in this embodiment of the present disclosure.

FIG. 2 is a schematic diagram of a structure of the server in FIG. 1 according to an embodiment of the present disclosure. As shown in FIG. 2, the server 200 includes at least one processor 210, a memory 250, and at least one network interface 220. Various components in the server 200 are coupled together by using a bus system 240. The bus system 240 is for implementing connection communication between the components. In addition to a data bus, the bus system 240 further includes a power bus, a control bus, and a state signal bus. However, for clear description, the various buses are denoted as the bus system 240 in FIG. 2.

The processor 210 may be an integrated circuit chip having a signal processing capability, such as a general-purpose processor, a digital signal processor (DSP), or another programmable logic device, a discrete gate or transistor logic device, or a discrete hardware component. The general-purpose processor may be a microprocessor, any conventional processor, or the like.

The memory 250 may be removable, non-removable, or a combination thereof. For example, a hardware device includes a solid-state memory, a hard disk drive, or an optical disk drive. In some embodiments, the memory 250 includes one or more storage devices physically located away from the processor 210.

The memory 250 includes a volatile memory or a non-volatile memory, and may include both a volatile memory and a non-volatile memory. The non-volatile memory may be a read-only memory (ROM), and the volatile memory may be a random access memory (RAM). The memory 250 described in this embodiment of the present disclosure is intended to include a memory of any suitable type.

In some embodiments, the memory 250 can store data to support various operations. An example of the data includes a program, a module, a data structure, or a subsets or superset thereof. Example descriptions are provided below.

An operating system 251 includes a system program for processing various basic system services and executing a hardware-related task, for example, a framework layer, a core library layer, and a driver layer, and is configured to implement various basic services and process a hardware-based task.

A network communication module 252 is configured to reach another electronic device through the one or more (wired or wireless) network interfaces 220. For example, the network interface 220 includes Bluetooth, wireless fidelity (Wi-Fi), and a universal serial bus (USB).

In some embodiment, an image processing device provided in an embodiment of the present disclosure may be implemented in a software manner. FIG. 2 shows an image processing device 255 stored in the memory 250. The image processing device 255 may be software in a form such as a program or a plug-in, and includes the following software modules: an image obtaining module 2551, an image combination module 2552, a feature extraction module 2553, an information recognition module 2554, a model training module 2555, a model optimization module 2556, and an information application module 2557. The modules are logical, so that the modules can be combined or further split arbitrarily based on an implemented function. Functions of the modules are described in the following specification.

In some embodiments, the image processing device provided in this embodiment of the present disclosure may be implemented in a hardware manner. In an example, the image processing device provided in this embodiment of the present disclosure may be a processor in a form of a hardware decoding processor, and is programmed to execute the image processing method provided in the embodiments of the present disclosure. For example, the processor in the form of a hardware decoding processor may adopt one or more application-specific integrated circuits (ASICs), DSPs, programmable logic devices (PLDs), complex programmable logic devices (CPLDs), field-programmable gate arrays (FPGAs) or other electronic components.

In some embodiments, the terminal or the server may run a computer program to implement the image processing method provided in the embodiments of the present disclosure. For example, the computer program may be a native program or a software module in the operating system, may be a native application (APP), to be specific, a program that needs to be installed in the operating system for running, such as a map APP, a navigation APP, or a smart city APP, or may be a mini program that can be embedded into any APP, to be specific, a program that is executable merely when the program is downloaded in a browser environment. In conclusion, the computer program described above may be an application program, a module, or a plug-in of any form.

The image processing method provided in the embodiments of the present disclosure is described below with reference to example applications and implementations of the image processing device provided in the embodiments of the present disclosure. In addition, the image processing method provided in the embodiments of the present disclosure is applied to various image processing scenarios such as a cloud technology, artificial intelligence, intelligent transportation, a map, and a vehicle.

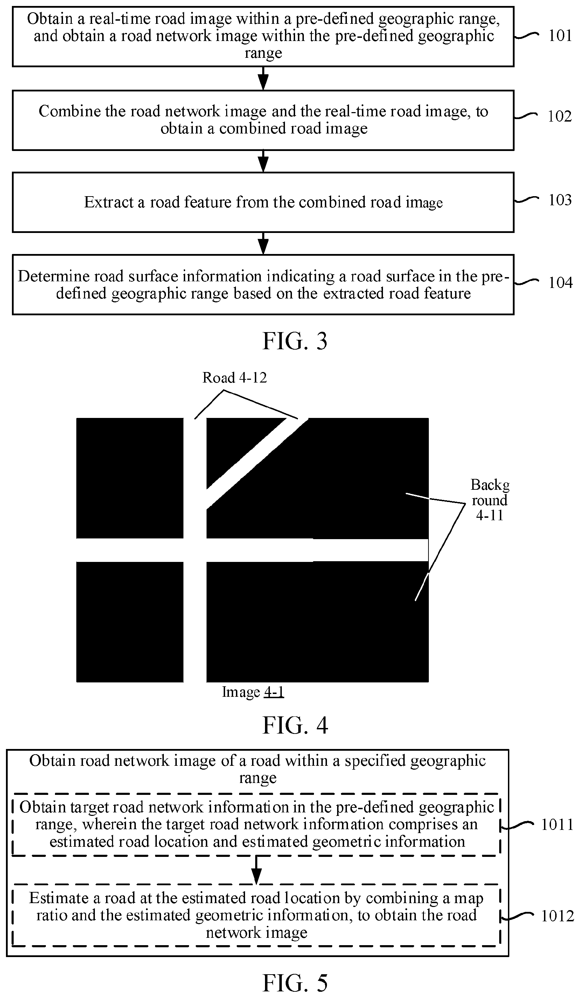

FIG. 3 is a schematic flowchart 1 of an image processing method according to an embodiment of the present disclosure. Descriptions are provided below with reference to operations shown in FIG. 3, and an execution body of the operations in FIG. 3 is an image processing device.

Operation 101: Obtain a real-time road image within a pre-defined geographic range, and obtain a road network image within the pre-defined geographic range.

In this embodiment of the present disclosure, when the image processing device extracts related information of a road surface for a road within the pre-defined geographic range, the image processing device first obtains the real-time road image and the road network image within the pre-defined geographic range, and extracts the related information of the road surface with reference to the real-time road image and the road network image. The image processing device may obtain the real-time road image by performing image collection on the road within the geographic range. The image collection may be performed in a high-altitude shooting manner, for example, shooting by an unmanned aerial vehicle or satellite imaging. The image processing device may obtain the road network image by performing image generation on road network information within the geographic range.

The road network image includes a road topology structure within the pre-defined geographic range, and describes connectivity of the road within the pre-defined geographic range. The connectivity of the road means that the road within the pre-defined geographic range is continuous and not interrupted. For example, FIG. 4 is an example road network image according to an embodiment of the present disclosure. As shown in FIG. 4, an image 4-1 is a road network image. A black region represents a background (where a background 4-11 is shown as an example), and a white region represents a location of a road (where a road 4-12 is shown as an example).

The real-time road image indicates the road within the pre-defined geographic range. In addition, the road network image and the real-time road image correspond to same geographic ranges, and the same geographic ranges are both the pre-defined geographic range.

Operation 102: Combine the road network image and the real-time road image, to obtain a combined road image as to-be-recognized image.

In this embodiment of the present disclosure, the image processing device extracts the related information of the road surface with reference to the road network image and the real-time road image. Therefore, after obtaining the road network image and the real-time road image, the image processing device combines the road network image and the real-time road image into the combined road image as the to-be-recognized image, to extract the related information of the road surface based on the to-be-recognized image. The road network image and the real-time road image may be combined in a channel splicing manner.

The road network image may be a single-channel image, for example, a gray-scale image. The real-time road image may be a single-channel image or a multi-channel image. When combining the road network image and the real-time road image, the image processing device splices channel information of the road network image and channel information of the real-time road image, to obtain the to-be-recognized image. Therefore, the to-be-recognized image is a multi-modal image, to be specific, includes both real-time information of the road within the pre-defined range and the road topology structure.

Operation 103: extract a road feature from the to-be-recognized image, to obtain an extracted road feature as a to-be-recognized feature.

In this embodiment of the present disclosure, the image processing device extracts a road feature from the to-be-recognized image, and an extracted road feature is the to-be-recognized feature. The to-be-recognized feature is for determining the related information of the road surface within the pre-defined geographic range.

In this embodiment of the present disclosure, the image processing device may first combine the road network image and the real-time road image, and then extract a road feature from the combined road image, the extracted road feature is the to-be-recognized feature. The image processing device may alternatively first extract a first feature of the road network image, then extract a second feature of the real-time road image, and finally combine the first feature and the second feature to obtain the to-be-recognized feature. This is not limited in this embodiment of the present disclosure.

Operation 104: Determine road surface information indicating a road surface in the pre-defined geographic range based on the extracted road feature, the road surface information being associated with the road surface within the pre-defined geographic range.

In this embodiment of the present disclosure, the image processing device recognizes a road surface based on the to-be-recognized feature, and determines the road surface information indicating the road surface within the pre-defined geographic range, and the obtained the road surface information is associated with the road surface within the pre-defined geographic range.

The road surface information is information associated with the road surface within the pre-defined geographic range. The road surface information includes at least one piece of the following information: a road surface form, a road surface size, a road surface location, a number of lanes, a lane width, a lane material, a lane location, a lane form, and a road sign. The road surface form represents a geometric shape of the road surface, for example, a rectangle or a circle. The road surface size is, for example, a width and a length of the road surface, or a radius of the road surface. The road surface location represents a geographic location of the road surface. The number of lanes represents the number of lanes on the road surface. The lane width represents a width of each lane on the road surface. The lane material represents a laying material of each lane on the road surface. The lane location represents a geographic location of each lane on the road surface. The lane form represents a geometric shape of each lane on the road surface. The road sign includes at least one of the following: a lane sign (for example, a steering sign or a traveling sign) of each lane on the road surface, and a sign (for example, diversion lines) of the road surface.

In a process in which the road surface information of the road within the pre-defined geographic range is obtained, the road surface information is obtained not only based on the real-time road image of the road within the pre-defined geographic range, but also with reference to the road network image of the road within the pre-defined geographic range. The real-time road image can accurately describe information included on the road, and the road network image can completely describe topological connectivity of the road. Therefore, when the road surface information is obtained with reference to the real-time road image and the road network image, the connectivity of the road can be improved while it is ensured that the road surface information is accurate, so that accuracy of the obtained road surface information can be improved.

FIG. 5 is an example schematic flowchart of obtaining a road network image according to an embodiment of the present disclosure. An execution body of operations in FIG. 5 is the image processing device. As shown in FIG. 5, in this embodiment of the present disclosure, that the image processing device obtains the road network image within the pre-defined geographic range in operation 101 in FIG. 3 includes operation 1011 and operation 1012. The operations are separately described below.

Operation 1011: Obtain target road network information within the pre-defined geographic range, where the target road network information includes an estimated road location and estimated geometric information.

In this embodiment of the present disclosure, the image processing device can obtain, from a road network information base, road network information matching the road within the pre-defined geographic range. The road network information matching the road within the pre-defined geographic range is referred to as the target road network information. The road network information base includes various pieces of road network information corresponding to various geographic ranges. In addition, the estimated geometric information includes at least one of a lane number range, a road width range, and a road level, and is configured for determining an estimated form of the road. The lane number range represents a range of the number of lanes respectively included in each road within the pre-defined geographic range, for example, two to four lanes. The road width range represents a width range of each road within the pre-defined geographic range, for example, a width of five meters to ten meters. The road level represents a level of each road within the pre-defined geographic range, for example, a first-grade road (corresponding to a width of eight meters to ten meters) or a second-grade road (corresponding to a width of four meters to eight meters).

Operation 1012: Estimate a road at the estimated road location with reference to a map ratio and the estimated geometric information, to obtain the road network image.

In this embodiment of the present disclosure, a pre-defined template image is set in the image processing device, or the image processing device can obtain a pre-defined template image from another device (for example, a storage device such as a database). The map ratio exists between the pre-defined template image and an actual geographic location. The image processing device estimates road network information at the estimated road location with reference to the map ratio and the estimated geometric information, to be specific, estimates, on the pre-defined template image, the road at the estimated road location based on the estimated geometric information, to map the target road network information to the pre-defined template image, so as to obtain the road network image.

The target road network information is converted into the road network image, so that the road surface can be obtained with reference to the real-time road image and the target road network information, to improve the accuracy of the obtained road surface information.

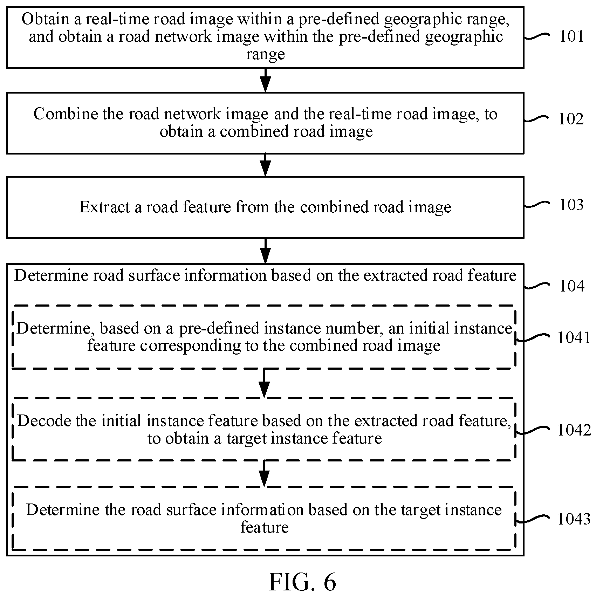

FIG. 6 is a schematic flowchart 2 of an image processing method according to an embodiment of the present disclosure. An execution body of operations in FIG. 6 is the image processing device. As shown in FIG. 6, operation 104 in FIG. 3 may be implemented through operation 1041 to operation 1043. In other words, that the image processing device determines road surface information based on the extracted road feature includes operation 1041 to operation 1043. The operations are separately described below.

Operation 1041: Determine, based on a pre-defined instance number, an initial instance feature corresponding to the to-be-recognized image.

In this embodiment of the present disclosure, the image processing device can obtain the pre-defined instance number, or the image processing device can obtain the pre-defined instance number from another device (for example, a storage device such as a database or an instruction transmitting device for extracting road surface information). The pre-defined instance number represents the pre-defined number of road surfaces, and the pre-defined road surface is a preset road surface whose existence is to be determined. Therefore, the pre-defined instance number is a maximum number of road surfaces included in the preset pre-defined geographic range. The image processing device performs instance-feature initialization on the to-be-recognized image based on the pre-defined instance number, to obtain the initial instance feature. The initial instance feature includes initial instance sub-features corresponding to the pre-defined instance number, and each of the initial instance sub-features represents a preset feature of the pre-defined road surface.

Operation 1042: Decode the initial instance feature based on the to-be-recognized feature, to obtain a target instance feature.

In this embodiment of the present disclosure, the image processing device decodes the initial instance feature based on the to-be-recognized feature, to accurately determine an instance feature of each road surface within the pre-defined geographic range. A decoded initial instance feature is the target instance feature.

The decoding refers to a process of determining, based on the to-be-recognized feature, whether each of the initial instance sub-features is a feature of the road surface. Therefore, the target instance feature represents a road surface feature existing within the pre-defined geographic range.

Operation 1043: determine the road surface information based on the target instance feature.

In this embodiment of the present disclosure, the image processing device recognizes a road surface based on the target instance feature, and combines the obtained related information of each road surface into the road surface information within the pre-defined geographic range.

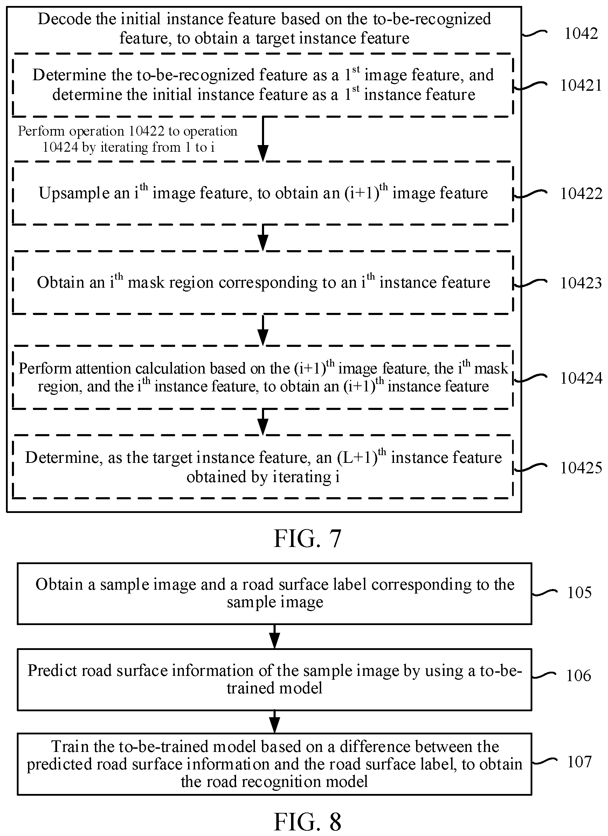

FIG. 7 is a schematic flowchart of obtaining a target instance feature according to an embodiment of the present disclosure. An execution body of operations in FIG. 7 is the image processing device. As shown in FIG. 7, operation 1042 in FIG. 6 may be implemented through operation 10421 to operation 10425. In other words, that the image processing device decodes the initial instance feature based on the to-be-recognized feature, to obtain the target instance feature includes operation 10421 to operation 10425. The operations are separately described below.

Operation 10421: Determine the to-be-recognized feature as a 1^{st} image feature, and determine the initial instance feature as a 1^{st} instance feature.

Because the to-be-recognized feature is a basic image feature extracted from the to-be-recognized image, the image processing device determines the to-be-recognized feature as the 1^{st} image feature. Because the initial instance feature is an initialized instance feature, the image processing device determines the initial instance feature as the 1^{st} instance feature.

Operation 10422 to operation 10424 are performed by iterating from 1 to i, where i is a positive integer variable.

Operation 10422: Upsample an i^{th} image feature, to obtain an (i+1)^{th} image feature.

The to-be-recognized feature is a feature that has a low resolution (which is lower than a pre-defined resolution) and a high dimension (which is higher than a pre-defined dimension) and that is extracted from the to-be-recognized image. To use the to-be-recognized feature as a feature assisting in determination of the road surface information performed based on the initial instance feature, the image processing device gradually upsamples the to-be-recognized feature. Therefore, the image processing device upsamples the i^{th} image feature each time, to obtain the (i+1)^{th} image feature. In other words, the image processing device upsamples the 1^{st} image feature, to obtain a 2^{nd} image feature, then upsamples the 2^{nd} image feature, to obtain a 3^{rd} image feature, and so on until iteration ends.

Operation 10423: Obtain an i^{th} mask region corresponding to an i^{th} instance feature.

When i is 1, the image processing device determines, through initialization, a 1^{st} mask region corresponding to the 1^{st} instance feature. When i is greater than 1, the image processing device predicts the i^{th} mask region corresponding to the i^{th} instance feature.

Operation 10424: Perform attention calculation based on the (i+1)^{th} image feature, the i^{th} mask region, and the i^{th} instance feature, to obtain an (i+1)^{th} instance feature.

After obtaining the (i+1)^{th} image feature and the i^{th} mask region, the image processing device performs attention calculation based on the (i+1)^{th} image feature, the i^{th} mask region, and the i^{th} instance feature, to optimize the i^{th} instance feature and improve accuracy of predicting the i^{th} instance feature. An optimized i^{th} instance feature is the (i+1)^{th} instance feature.

In this embodiment of the present disclosure, the attention calculation includes at least one of masked attention calculation, self attention calculation, and feed-forward propagation. The masked attention calculation is for learning a local dependency between each pixel and a mask region. The self attention calculation is for learning global information between each pixel and an entire image. Therefore, when the attention calculation includes the masked attention calculation, the self attention calculation, and the feed-forward propagation, that the image processing device performs attention calculation based on the (i+1)^{th} image feature, the i^{th} mask region, and the i^{th} instance feature, to obtain the (i+1)^{th} instance feature includes: The image processing device performs masked attention calculation based on the (i+1)^{th} image feature, the i^{th} mask region, and the i^{th} instance feature, to obtain an (i+1)^{th} initial feature; performs self attention calculation based on the (i+1)^{th} initial feature, to obtain an (i+1)^{th} to-be-processed feature; and performs feed-forward propagation based on the (i+1)^{th} to-be-processed feature, to obtain the (i+1)^{th} instance feature.

Operation 10425: Determine, as the target instance feature, an (L+1)^{th} instance feature obtained by iterating i.

In this embodiment of the present disclosure, the image processing device performs determining once every time i is iterated, to determine whether an iteration end condition is satisfied. When the iteration end condition is not satisfied, the image processing device continues to iterate i to perform operation 10422 to operation 10424. When the iteration end condition is satisfied, the image processing device performs operation 10425.

The iteration end condition may be that a first accuracy indicator threshold is reached, a first iteration number threshold is reached, a first iteration duration threshold is reached, a combination thereof is reached, or the like. This is not limited in this embodiment of the present disclosure. L represents the number of iterations of i, and is a constant. For example, when the iteration is performed once, the target instance feature is a 2^{nd} instance feature. When the iteration is performed thrice, the target instance feature is a 3^{rd} instance feature.

In this embodiment of the present disclosure, when the target instance feature is obtained through operation 10421 to operation 10425, that the image processing device determines the road surface information based on the target instance feature in operation 1043 in FIG. 6 includes: The image processing device predicts an instance class based on the target instance feature, to obtain a road surface instance; upsamples an (L+1)^{th} image feature, to obtain a target image feature; fuses the target image feature and the target instance feature, to obtain a fused feature as a mask feature; and predicts the road surface information based on the mask feature,. In other words, the image processing device predicts the instance class based on the target instance feature, where the instance class includes at least one of a road surface class and an intersection class; upsamples the (L+1)^{th} image feature, to obtain the target image feature; fuses the target image feature and the target instance feature, to obtain a fused feature as the mask feature; and finally predicts, for the instance class belonging to the road surface class, the road surface information based on the mask feature.

When the image processing device predicts an instance of the road surface class, the image processing device obtains the road surface information. The (L+1)^{th} image feature is obtained by performing L times of iterative upsampling on the 1^{st} image feature. The road surface instance is a feature of the road surface class. The image processing device determines, from the mask feature, a feature corresponding to the road surface instance, and determines the road surface association information based on the determined feature, to determine the road surface information.

In this embodiment of the present disclosure, the feature is extracted and the road surface is recognized by using a road recognition model. FIG. 8 is an example schematic flowchart of obtaining a road recognition model according to an embodiment of the present disclosure. An execution body of operations in FIG. 8 is the image processing device. As shown in FIG. 8, the road recognition model may be obtained through training in operation 105 to operation 107. The operations are separately described below.

Operation 105: Obtain a sample image and a road surface label corresponding to the sample image.

In this embodiment of the present disclosure, the image processing device obtains training data, to obtain the sample image and the road surface label corresponding to the sample image. The sample image is obtained based on a sample real-time road image and a sample road network image. The sample real-time road image represents road imaging information within a sample geographic range, and the sample road network image includes a road topology structure within the sample geographic range. In addition, a process in which the image processing device obtains the sample image based on the sample real-time road image and the sample road network image is similar to the process in which the image processing device obtains the to-be-recognized image, and details are not described herein again in this embodiment of the present disclosure. The road surface label is label information of the sample image in terms of a road surface, and represents road surface association information within the sample geographic range.

Operation 106: Predict road surface information of the sample image by using a to-be-trained model.

In this embodiment of the present disclosure, the image processing device can obtain the to-be-trained model. The to-be-trained model is a to-be-trained neural network model for predicting road surface association information. In addition, the sample image and the road surface label corresponding to the sample image are training data of the to-be-trained model. Therefore, the image processing device predicts the sample image based on the to-be-trained model, to predict road surface association information in the sample image, and determines the predicted road surface association information as the predicted road surface information.

The to-be-trained model may be a constructed original neural network model, a pre-trained neural network model, or the like. This is not limited in this embodiment of the present disclosure.

Operation 107: Train the to-be-trained model based on a difference between the predicted road surface information and the road surface label, to obtain the road recognition model.

In this embodiment of the present disclosure, the image processing device compares the predicted road surface information with the road surface label, to determine a loss function value of the to-be-trained model based on a difference between the predicted road surface information and the road surface label; and performs back propagation in the to-be-trained model based on the loss function value, to adjust a model parameter in the to-be-trained model. In addition, the to-be-trained model is trained iteratively. When iterative training ends, a current to-be-trained model obtained through the iterative training is the road recognition model.

When determining that the iterative training satisfies a training end condition, the image processing device determines that the iterative training ends. Otherwise, the iterative training continues to be performed. The training end condition may be that a second accuracy indicator threshold is reached, a second iteration number threshold is reached, a second iteration duration threshold is reached, a combination thereof is reached, or the like. This is not limited in this embodiment of the present disclosure.

In this embodiment of the present disclosure, after operation 107 in FIG. 8, a process of optimizing the road recognition model is further included. In other words, after the image processing device trains the to-be-trained model based on the difference between the predicted road surface information and the road surface label, to obtain the road recognition model, the image processing method further includes: The image processing device first obtains a new sample image and a new road surface label corresponding to the new sample image; predicts new predicted road surface information of the new sample image by using the road recognition model; and optimizes the road recognition model based on a difference between the new predicted road surface information and the new road surface label, to obtain a target road recognition model.

The target road recognition model is for predicting road surface association information of a new to-be-recognized image. In addition, a process in which the image processing device obtains the new sample image and the new road surface label corresponding to the new sample image is similar to the process in which the image processing device obtains the sample image and the road surface label corresponding to the sample image. A process in which the image processing device trains the to-be-trained model is similar to the process in which the image processing device optimizes the road recognition model. Details are not described herein again in this embodiment of the present disclosure.

After the road recognition model is obtained by training the to-be-trained model, the road recognition model is optimized based on the new sample image to obtain the target road recognition model, so that a generalization capability of the target road recognition model can be improved, and the accuracy of the obtained road surface information can be further improved.

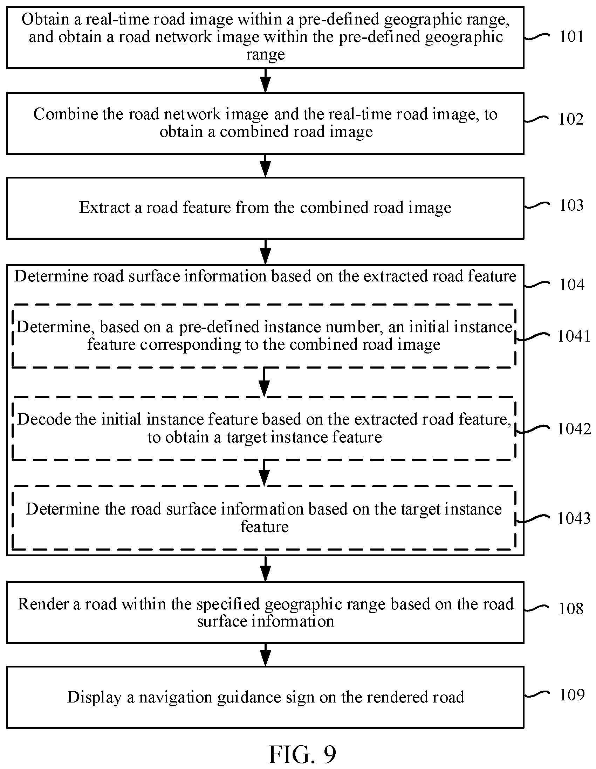

FIG. 9 is a schematic flowchart 3 of an image processing method according to an embodiment of the present disclosure. An execution body of operations in FIG. 9 is the image processing device. As shown in FIG. 9, operation 108 and operation 109 are further included after operation 104 in FIG. 3. In other words, after the image processing device recognizes a road surface based on the to-be-recognized feature, to obtain the road surface information, the image processing method further includes operation 108 and operation 109. The operations are separately described below.

Operation 108: Render a road within the pre-defined geographic range based on the road surface information.

In this embodiment of the present disclosure, the image processing device is further configured to render the road within the pre-defined geographic range based on the road surface information. Because the road surface information includes at least one of a road surface form, a road surface size, a road surface location, the number of lanes, a lane width, a lane material, a lane location, a lane form, and a road sign, the rendered road includes at least one of the road surface form, the road surface size, the road surface location, the number of lanes, the lane width, the lane material, the lane location, the lane form, and the road sign.

Operation 109: Display a navigation guidance sign on the rendered road.

In this embodiment of the present disclosure, the image processing device may render a smart city based on the rendered road. In addition, the image processing device may further implement accurate navigation based on the rendered road.

The image processing device performs accurate navigation based on information on the rendered road, to display the navigation guidance sign. For example, when the rendered road includes a steering guidance sign, a navigation guidance sign pointing to a lane that can be turned to is displayed on a lane on which the steering guidance sign is located.

In this embodiment of the present disclosure, after the image processing device recognizes a road surface based on the to-be-recognized feature, to obtain the road surface information, the image processing method further includes: The image processing device determines positioning information based on the road surface information, where the positioning information is a lane location.

Because the positioning information is a lane location of a road on which a positioning object is located, positioning accuracy of the positioning object can be improved. The positioning object represents an object passing on the road, for example, a pedestrian or a vehicle.

The following describes example application of this embodiment of the present disclosure in an actual application scenario. A process in which road surface information is obtained with reference to a satellite image (which is referred to as a real-time road image) and SD road network information (which is referred to as target road network information) of a road is described in this example application.

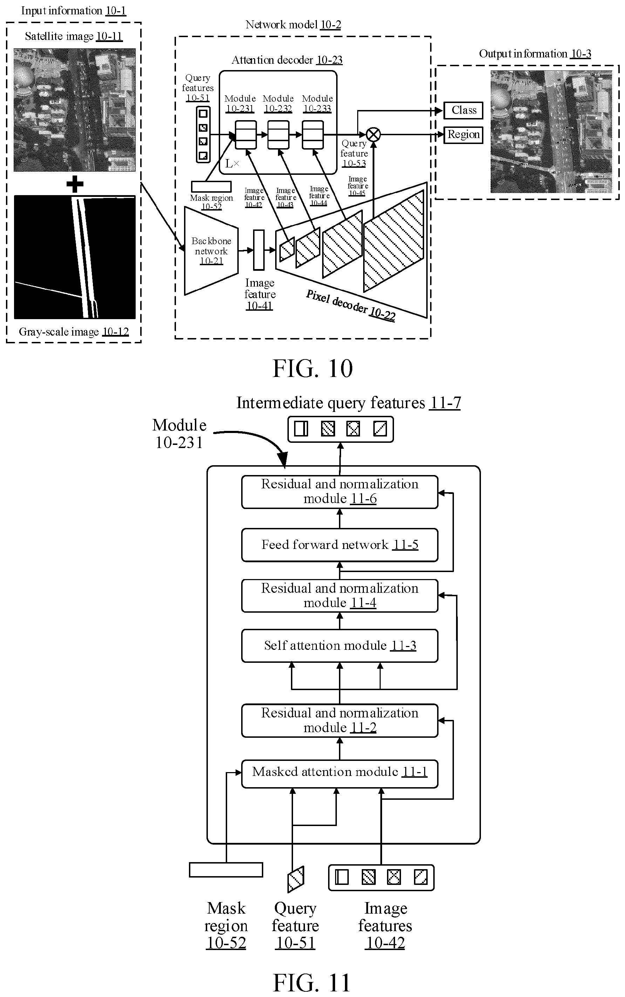

FIG. 10 is an example schematic diagram of obtaining road surface information according to an embodiment of the present disclosure. As shown in FIG. 10, after input information 10-1 passes through a network model 10-2 (which is referred to as a road recognition model), output information 10-3 (which is referred to as road surface information) is obtained.

The input information 10-1 includes a satellite image 10-11 in a same geographic range (which is referred to as a pre-defined geographic range) and a gray-scale image 10-12 (which is referred to as a road network image) generated based on the SD road network information, and the satellite image 10-11 and the gray-scale image 10-12 have a same pixel size. The network model 10-2 includes a backbone network 10-21, a pixel decoder 10-22, and an attention decoder (Transformer Decoder) 10-23. The output information 10-3 includes association information of various road surfaces.

Modules of the network model 10-2 are separately described below.

The backbone network 10-21 is configured to extract a feature. The satellite image 10-11 of three channels (red green blue (RGB) channels) and the gray-scale image 10-12 of a single channel are composed into a multi-modal image (which is referred to as a to-be-recognized image) of four channels. The backbone network 10-21 is configured to extract an image feature 10-41 (which is referred to as a to-be-recognized feature) from the multi-modal image of four channels. The image feature 10-41 is an input feature of the pixel decoder 10-22, and the image feature 10-41 is a low-resolution high-dimensional feature. In addition, the backbone network 10-21 includes a residual network (Resnet), an attention module (Swin Transformer), and the like.

The pixel decoder 10-22 is configured to gradually upsample the image feature 10-41, to obtain features that have high resolutions (which are lower than a pre-defined resolution) and low dimensions (which are higher than a pre-defined dimension) and that have different scales (where an image feature 10-42 to an image feature 10-45 are shown as an example, and are referred to as i^{th} image features). The high-resolution low-dimensional feature can improve accuracy of recognizing a road surface.

The attention decoder 10-23 includes a plurality of layers of modules. Modules 10-231 to 10-233 are shown as an example, and are configured to obtain, though decoding, a final query feature 10-53 (which is referred to as an (L+1)^{th} instance feature) with reference to initialized query features 10-51 (which are referred to as initial instance features) of a pre-defined instance number, a mask region 10-52 corresponding to the query features 10-51, and the high-resolution low-dimensional features (including the image feature 10-42 to the image feature 10-44) of different scales; predict a class based on the query feature 10-53; and predict a corresponding region (Mask) based on a fused feature of the query feature 10-53 and the image feature 10-45, to obtain the output information 10-3. A process of obtaining the query feature 10-53 includes L times of cycle processing. Each time of cycle processing includes a plurality of layers of feature processing corresponding to the plurality of layers of modules. Three layers of feature processing are shown as an example, and each layer of feature processing is performed based on a high-resolution low-dimensional feature of a corresponding scale.

A process of one layer of feature processing is described below by using the module 10-231 as an example.

FIG. 11 is an example diagram of a network structure of a module according to an embodiment of the present disclosure, and the module is configured to complete one layer of feature processing. As shown in FIG. 11, the module 10-231 in FIG. 10 includes a masked attention module 11-1, a residual and normalization (Add & Norm) module 11-2, a self attention module 11-3, a residual and normalization module 11-4, a feed forward network (FFN) 11-5, and a residual and normalization module 11-6.

The query features 10-51, the mask region 10-52, and the image feature 10-42 sequentially pass through the modules in the module 10-231, so that intermediate query features 11-7 can be obtained. The intermediate query features 11-7 are used as input to the module 10-232 in FIG. 10 with reference to the image feature 10-43.

The road surface information obtained by using the image processing method provided in this embodiment of the present disclosure is described below.

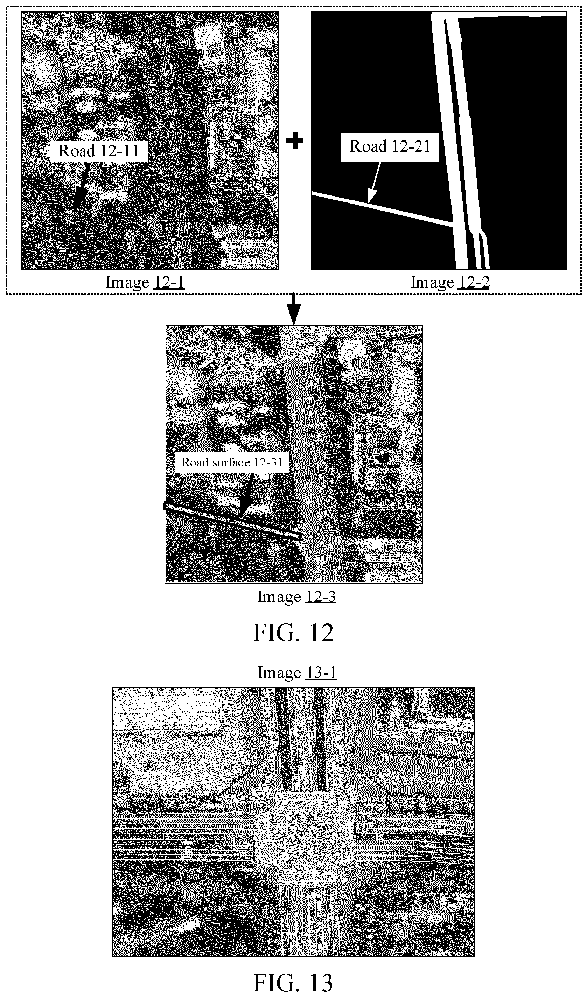

FIG. 12 is an example schematic diagram of a result of obtaining a road surface according to an embodiment of the present disclosure. As shown in FIG. 12, an image 12-1 is a satellite image for a geographic range A. In the image 12-1, a road 12-11 is partially blocked by trees. An image 12-2 is a gray-scale image generated based on SD road network information in the geographic range A. In the image 12-2, a road 12-21 (which corresponds to the roads 12-11 in the image 12-1) is connected. A road surface is obtained with reference to the image 12-1 and the image 12-2, and a road surface 12-31 shown in an image 12-3 can be obtained. Therefore, coverage and connectivity of the road surface can be improved.

Application performed based on the road surface information obtained in this embodiment of the present disclosure is described below.

FIG. 13 is an example schematic diagram of application of road surface information according to an embodiment of the present disclosure. As shown in FIG. 13, an image 13-1 is a rendering result of lane-level data implemented based on road surface information.

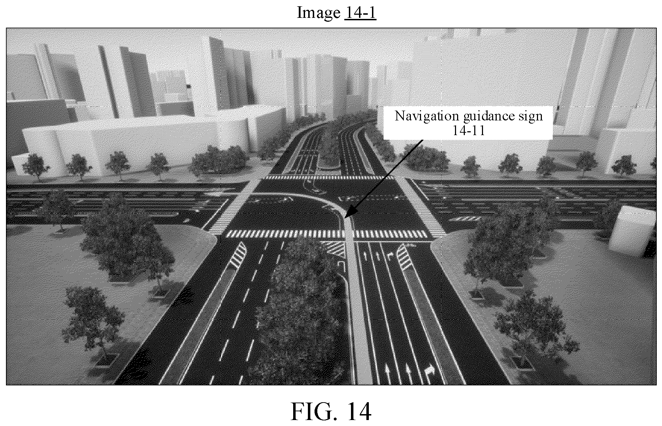

FIG. 14 is another example schematic diagram of application of road surface information according to an embodiment of the present disclosure. As shown in FIG. 14, an image 14-1 is a road rendered based on lane-level data, and a navigation guidance sign 14-11 is further displayed on the rendered road. The navigation guidance sign 14-11 is a sign for navigating from one lane to another lane, so that navigation accuracy is improved.

In this embodiment of the present disclosure, the road surface information is obtained with reference to the satellite image and the SD road network information, so that efficiency, coverage, and accuracy of the road surface information when there is a block in the satellite image can be improved.

The following continues to describe an example structure that is implemented as a software module and that is of the image processing device 255 provided in this embodiment of the present disclosure. In some embodiments, as shown in FIG. 2, the software module in the image processing device 255 stored in the memory 250 may include:
an image obtaining module 2551, configured to obtain a real-time road image within a pre-defined geographic range, and obtain a road network image within the pre-defined geographic range, the real-time road image indicating a road within the pre-defined geographic range, and the road network image indicating a topology structure of the road within the pre-defined geographic range;
an image combination module 2552, configured to combine the road network image and the real-time road image, to obtain a combined road image which is a to-be-recognized image;
a feature extraction module 2553, configured to extract a road feature from the to-be-recognized image, to obtain the extracted road feature as a to-be-recognized feature; and
an information recognition module 2554, configured to determine road surface information indicating a road surface in the pre-defined geographic range based on the extracted road feature, the road surface information being associated with the road surface within the pre-defined geographic range.

In this embodiment of the present disclosure, the image obtaining module 2551 is further configured to obtain target road network information within the pre-defined geographic range, where the target road network information includes an estimated road location and estimated geometric information, and the estimated geometric information includes at least one of a lane number range, a road width range, and a road level; and estimate a road at the estimated road location with reference to a map ratio and the estimated geometric information, to obtain the road network image.

In this embodiment of the present disclosure, the information recognition module 2554 is further configured to determine, based on a pre-defined instance number, an initial instance feature corresponding to the to-be-recognized image, where the pre-defined instance number represents a pre-defined number of road surfaces, the initial instance feature includes initial instance sub-features corresponding to the pre-defined instance number, and each of the initial instance sub-features represents a preset feature of the pre-defined road surface; decode the initial instance feature based on the to-be-recognized feature, to obtain a target instance feature; and determine the road surface information based on the target instance feature.

In this embodiment of the present disclosure, the information recognition module 2554 is further configured to determine the to-be-recognized feature as a 1^{st} image feature, and determine the initial instance feature as a 1^{st} instance feature; and perform the following processing by iterating from 1 to i, where i is a positive integer: upsampling an i^{th} image feature, to obtain an (i+1)^{th} image feature; obtaining an i^{th} mask region corresponding to an i^{th} instance feature; performing attention calculation based on the (i+1)^{th} image feature, the i^{th} mask region, and the i^{th} instance feature, to obtain an (i+1)^{th} instance feature; and determining, as the target instance feature, an (L+1)^{th} instance feature obtained by iterating i, where L represents the number of iterations of i.

In this embodiment of the present disclosure, the information recognition module 2554 is further configured to predict an instance class based on the target instance feature, to obtain a road surface instance; upsample an (L+1)^{th} image feature, to obtain a target image feature; fuse the target image feature and the target instance feature, to obtain a fused feature as a mask feature; and predict the road surface information based on the mask feature.

In this embodiment of the present disclosure, the information recognition module 2554 is further configured to perform masked attention calculation based on the (i+1)^{th} image feature, the i^{th} mask region, and the i^{th} instance feature, to obtain an (i+1)^{th} initial feature; perform self attention calculation based on the (i+1)^{th} initial feature, to obtain an (i+1)^{th} to-be-processed feature; and perform feed-forward propagation based on the (i+1)^{th} to-be-processed feature, to obtain the (i+1)^{th} instance feature, where the attention calculation includes the masked attention calculation, the self attention calculation, and the feed-forward propagation.

In this embodiment of the present disclosure, the feature is extracted and the road surface information is determined by using a road recognition model. The image processing device 255 further includes a model training module 2555, configured to obtain a sample image and a road surface label corresponding to the sample image, where the sample image is obtained based on a sample real-time road image and a sample road network image; predict road surface information of the sample image by using a to-be-trained model, where the to-be-trained model is a to-be-trained neural network model for predicting road surface association information; and train the to-be-trained model based on a difference between the predicted road surface information and the road surface label, to obtain the road recognition model.

In this embodiment of the present disclosure, the image processing device 255 further includes a model optimization module 2556, configured to obtain a new sample image and a new road surface label corresponding to the new sample image; predict new road surface information of the new sample image by using the road recognition model; and optimize the road recognition model based on a difference between the new predicted road surface information and the new road surface label, to obtain a target road recognition model, where the target road recognition model is for predicting road surface association information of a new to-be-recognized image.

In this embodiment of the present disclosure, the road surface information includes at least one piece of the following information: a road surface form, a road surface size, a road surface location, the number of lanes, a lane width, a lane material, a lane location, a lane form, and a road sign.

In this embodiment of the present disclosure, the image processing device 255 further includes an information application module 2557, configured to render a road within the pre-defined geographic range based on the road surface information, and display a navigation guidance sign on the rendered road; or determine positioning information based on the road surface information, where the positioning information is a lane location.

An embodiment of the present disclosure provides a computer program product. The computer program product includes computer-executable instructions or a computer program. The computer-executable instructions or computer program is stored in a computer-readable storage medium. A processor of an electronic device reads the computer-executable instructions or computer program from the computer-readable storage medium, and executes the computer-executable instructions or computer program, to enable the electronic device to perform the image processing method in the embodiments of the present disclosure.

An embodiment of the present disclosure provides a computer-readable storage medium, having computer-executable instructions or a computer program stored therein. When the computer-executable instructions or computer program is executed by a processor, the processor is enabled to perform the image processing method provided in the embodiments of the present disclosure, for example, the image processing method shown in FIG. 3.

In some embodiments, the computer-readable storage medium may be a memory such as a ferroelectric random access memory (FRAM), a ROM, a flash memory, a magnetic surface memory, an optical disc, or a compact disc read-only memory (CD-ROM), or may be various devices including one or any combination of the foregoing memories.

In some embodiments, the computer-executable instructions may be in a form of a program, software, a software module, a script, or code, written in a programming language of any form (including a compiled or interpreted language, or a declarative or procedural language), and may be deployed in any form, including being deployed as a stand-alone program or as a module, a component, a subroutine, or another unit suitable for use in a computing environment.

In an example, the computer-executable instructions may, but do not necessarily correspond to, a file in a file system, and may be stored as a part of a file having another program or data stored therein. For example, the computer-executable instructions are stored in one or more scripts in a hypertext markup language (HTML) text, stored in a single file dedicated to a discussed program, or stored in a plurality of collaborative files (for example, files having one or more modules, subprograms, or code parts).

In an example, the computer-executable instructions may be deployed on an electronic device for execution (where in this case, the electronic device is an image processing device), or may be executed on a plurality of electronic devices located at a same location (where in this case, the plurality of electronic devices located at the same location are image processing devices). Alternatively, the computer-executable instructions are executed on a plurality of electronic devices that are connected through a communication network and that are distributed at a plurality of locations (where in this case, the plurality of electronic devices that are connected through the communication network and that are distributed at the plurality of locations are image processing devices).

In the embodiments of the present disclosure, relevant data such as the real-time road image and the sample real-time road image is involved. When the embodiments of the present disclosure are applied to a specific product or technology, user permission or consent needs to be obtained, and collection, use, and processing of the relevant data need to comply with relevant laws, regulations, and standards of relevant countries and regions.

In conclusion, in the embodiments of the present disclosure, in the process in which the road surface information of the road within the pre-defined geographic range is obtained, the road surface information is obtained not only based on the real-time road image of the road within the pre-defined geographic range, but also with reference to the road network image of the road within the pre-defined geographic range. The real-time road image can accurately describe the information included on the road, and the road network image can completely describe the topological connectivity of the road. Therefore, when the road surface information is obtained with reference to the real-time road image and the road network image, the connectivity of the road can be improved while it is ensured that the road surface information is accurate, so that the accuracy, the efficiency, and the coverage of the obtained road surface information can be improved.

The foregoing descriptions are merely embodiments of the present disclosure, and are not intended to limit the protection scope of the present disclosure. Any modification, equivalent replacement, and improvement made within the spirit and scope of the present disclosure are included in the protection scope of the present disclosure.

## Claims

1. An image processing method, executable by an electronic device, the method comprising:
obtaining a real-time road image within a pre-defined geographic range, and obtaining a road network image within the pre-defined geographic range, the real-time road image indicating a road within the pre-defined geographic range, and the road network image indicating a topology structure of the road;
combining the road network image and the real-time road image, to obtain a combined road image;
extracting a road feature from the combined road image; and
determining road surface information indicating a road surface in the pre-defined geographic range based on the extracted road feature, the road surface information being associated with the road surface within the pre-defined geographic range.

2. The method according to claim 1, wherein the obtaining a road network image within the pre-defined geographic range comprises:
obtaining target road network information within the pre-defined geographic range, wherein the target road network information comprises an estimated road location and estimated geometric information, and the estimated geometric information comprises at least one of a lane number range, a road width range, and a road level; and
estimating a road at the estimated road location by combining a map ratio and the estimated geometric information, to obtain the road network image.

3. The method according to claim 1 or 2, wherein the determining road surface information based on the extracted road feature comprises:
determining, based on a pre-defined instance number, an initial instance feature corresponding to the combined road image, wherein the pre-defined instance number represents a pre-defined number of road surfaces, the initial instance feature comprises initial instance sub-features of the pre-defined instance number, and each of the initial instance sub-features indicating a preset feature of the pre-defined road surface;
decoding the initial instance feature based on the extracted road feature, to obtain a target instance feature; and
determining the road surface information based on the target instance feature.

4. The method according to claim 3, wherein the decoding the initial instance feature based on the extracted road feature, to obtain a target instance feature comprises:
determining the extracted road feature as a 1^{st} image feature, and determining the initial instance feature as a 1^{st} instance feature; and
performing the following processing by iterating from 1 to i, wherein i is a positive integer:
upsampling an i^{th} image feature, to obtain an (i+1)^{th} image feature;
obtaining an i^{th} mask region corresponding to an i^{th} instance feature;
performing attention calculation based on the (i+1)^{th} image feature, the i^{th} mask region, and the i^{th} instance feature, to obtain an (i+1)^{th} instance feature; and
determining, as the target instance feature, an (L+1)^{th} instance feature obtained by iterating i, wherein L represents a number of iterations of i.

5. The method according to claim 4, wherein the determining the road surface information based on the target instance feature comprises:
predicting an instance class based on the target instance feature, to obtain a road surface instance;
upsampling the (L+1)^{th} image feature, to obtain a target image feature;
fusing the target image feature and the target instance feature, to obtain a fused feature; and
predicting the road surface information based on the fused feature.

6. The method according to claim 4, wherein the performing attention calculation based on the (i+1)^{th} image feature, the i^{th} mask region, and the i^{th} instance feature, to obtain an (i+1)^{th} instance feature comprises:
performing masked attention calculation based on the (i+1)^{th} image feature, the i^{th} mask region, and the i^{th} instance feature, to obtain an (i+1)^{th} initial feature;
performing self attention calculation based on the (i+1)^{th} initial feature, to obtain an (i+1)^{tn} to-be-processed feature; and
performing feed-forward propagation based on the (i+1)^{th} to-be-processed feature, to obtain the (i+1)^{th} instance feature, wherein the attention calculation comprises the masked attention calculation, the self attention calculation, and the feed-forward propagation.

7. The method according to claim 1 or 2, wherein the road feature is extracted and the road surface information is determined by using a road recognition model, and the road recognition model is obtained through training according to the following operations:
obtaining a sample image and a road surface label corresponding to the sample image, wherein the sample image is obtained based on a sample real-time road image and a sample road network image;
predicting road surface information of the sample image by using a to-be-trained model, wherein the to-be-trained model is a to-be-trained neural network model for predicting information associated with the road surface; and
training the to-be-trained model based on a difference between the predicted road surface information and the road surface label, to obtain the road recognition model.

8. The method according to claim 7, wherein after the training the to-be-trained model based on a difference between the predicted road surface information and the road surface label, to obtain the road recognition model, the method further comprises:
obtaining another sample image and another road surface label corresponding to the another sample image;
predicting road surface information based on the another sample image by using the road recognition model; and
optimizing the road recognition model based on a difference between the predicted road surface information of the another sample image and the another road surface label, to obtain a target road recognition model, wherein the target road recognition model is for predicting road surface information of an image.

9. The method according to claim 1 or 2, wherein the road surface information comprises at least one of a road surface form, a road surface size, a road surface location, a number of lanes, a lane width, a lane material, a lane location, a lane form, and a road sign.

10. The method according to claim 1 or 2, wherein after the determining the road surface information based on the extracted road feature, the method further comprises:
rendering the road within the pre-defined geographic range based on the road surface information, and displaying a navigation guidance sign on the rendered road; or
determining positioning information based on the road surface information, wherein the positioning information is a lane location.

11. An image processing device, comprising:
an image obtaining module, configured to obtain a real-time road image within a pre-defined geographic range, and obtain a road network image within the pre-defined geographic range, the real-time road image indicating a road within the pre-defined geographic range, and the road network image indicating a topology structure of the road;
an image combination module, configured to combine the road network image and the real-time road image, to obtain a combined road image;
a feature extraction module, configured to extract a road feature from the combined road image; and
an information recognition module, configured to determine road surface information indicating a road surface in the pre-defined geographic range based on the extracted road feature, the road surface information being associated with the road surface within the pre-defined geographic range.

12. An electronic device for image processing, the electronic device comprising:
a memory, configured to store computer-executable instructions or a computer program; and
a processor, configured to implement, when executing the computer-executable instructions or computer program stored in the memory, the image processing method according to any one of claims 1 to 10.

13. A computer-readable storage medium, having computer-executable instructions or a computer program stored therein, when the computer-executable instructions or computer program is executed by a processor, the image processing method according to any one of claims 1 to 10 being implemented.

14. A computer program product, comprising computer-executable instructions or a computer program, when the computer-executable instructions or computer program is executed by a processor, the image processing method according to any one of claims 1 to 10 being implemented.
